# EUROPEAN PATENT SPECIFICATION

(11) **EP 0 523 068 B1**
(45) Date of publication and mention of the grant of the patent: **10.04.1996**
(21) Application number: 91905236.5
(22) Date of filing: 14.02.1991
(51) Int. Cl.: G01F 1/74

(54) **IMPROVEMENTS TO TWO AND THREE-PHASE FLOW MEASUREMENT**
VERBESSERTE ZWEI- UND DREIPHASENSTRÖMUNGSMESSUNG
MESURE AMELIOREE D'UN DEBIT EN DEUX OU TROIS PHASES

(30) Priority: 02.04.1990 US 502691; 16.11.1990 US 614505
(43) Date of publication of application: 20.01.1993
(73) Proprietor: AGAR, Joram, Cayman Islands (KY)
(72) Inventor: AGAR, Joram, Cayman Islands (KY)
(74) Representative: Beresford, Keith Denis Lewis
(86) International application number: PCT/GB91/00229
(87) International publication number: WO 91/15738

(56) References cited:
- EP-A- 0 084 405
- DE-B- 1 119 529
- FR-A- 2 386 021
- GB-A- 2 180 352

## Description

### BACKGROUND OF THE INVENTION

### Field of the Invention

The present invention relates to the on-line measurement of a two-phase flow or a three-phase flow which does not require the physical separation of the flow of gas from the flow of liquid.

### Description of the Related Art

The measurement of two-phase flow (gas and liquid flowing together) is very difficult as conventional flow meters cannot handle both gas and liquid simultaneously. Conventional flow meters are divided into three categories: Differential pressure type, volumetric type and mass flow type. The first category comprises orifice plates, venturi tubes, pitot tubes, etc. The second category comprises turbines, positive displacement, magnetic flow meters, etc. While in the third category one finds vibrating type (corollis), heat transfer, momentum type etc.

The first category yields aifferential pressure output, which is related to the velocity of flow at the downstream pressure tap point, according to Bernoulli's equation${\text{Δp = ρv}}^{\text{2}} \text{/2g}$ where
Δp = differential pressure across the device
ρ = density of the fluid at the downstream pressure tap
v = velocity of the fluid at the downstream pressure tap
g = gravitational constant

Thus a change in the gas/liquid ratio will affect the density ρ and will appear as a change in velocity. As it is important to know how much gas and how much liquid flow through the meter, this type of flow meter cannot give the answer.

The instruments of the second category cannot distinguish between gas and liquid, and give nearly equal flow rate to both. Again they are unable to determine how much gas and how much liquid pass through them if the flow consists of a two-phase fluid.

The third category suffers from the same disadvantage, plus the added inability of the vibrating type mass flow meters to vibrate properly when the gas content in the fluid exceeds 20% by volume.

As none of the above techniques can resolve the fluid's components, it was required in the past to physically separate them, and then measure each component separately. Two types of separators are known. The old two-phase separator, and a new dynamic separator. The first one slows the incoming fluid, allows the gas to expand, and measures the gas outlet from the top and the liquid outlet from the bottom. If the fluid is made of three components, such as oil and water and gas, a further analysis of the discharged liquid is performed. In the second case, two inclined tubes are used. The gas tends to collect in the upper one, while the liquid flows in the bottom one. Again, in the case of a three-phase fluid, further analysis of the oil/water content is required.

The big draw back of these methods is their size and the delay that they cause in the measurement. In order to allow the small gas bubbles to float up in the liquid, sufficient time must be allowed. The rate at which the bubbles float upwards, is determined by Stoke's Law:${\text{vτ = k(ρ}}_{\text{L}} {\text{- ρ}}_{\text{g}} {\text{)d}}^{\text{2}} \text{/µ}$ where
vτ = the terminal velocity of the bubble
k = Dimensional Constant
ρ_{L} = Density of the liquid
ρ_{g} = Density of the gas
µ = Viscosity of the liquid
d = Diameter of the bubble

Thus, in highly viscous liquids, the terminal velocity is very slow and longer time is required for the separation, i.e., the vessel size must increase, and with it the costs.

Most oil wells produce gas, oil and liquid simultaneously. Each component of such a three-phase fluid is required to be measured for fiscal and operation reasons. It is very uneconomical to build multiple separating vessels to measure each well. There is a large economic demand to perform these measurements in the field at low cost. In the case of sub-sea level wells and offshore platforms, size is also at a premium. There is therefore a big demand to measure all three components, without having to physically separate them.

FR A 2386021 discloses a device for measuring the volume flow rates of both phases of a gas and liquid forming a diphase flow, without requiring separation of the phases. An embodiment of the device consists of two serially connected flow meters separated by a restriction. The volume flow rates are calculated by processing information provided at each flow meter in respect of the total volume flow rate, the pressure and temperature.

GB A 2180352 discloses a device for measuring the volume flow rates of each phase of a three phase flow, particularly applicable to the measurement of the flow of oil, water and gas in a petroleum stream. The device only operates, however, on a sample of the stream and requires separation of the phases.

### SUMMARY OF THE INVENTION

Accordingly, an object of the present invention is to provide for a novel device for measuring multi-phase fluid flow without the need to physically separate the gas from the liquid.

The present invention solves the above mentioned problems by providing for a device for measuring multi-phase fluid flow as defined by the independent claims.

### Brief Description of the Drawings

A more complete appreciation of the invention and many of the attendant advantages thereof will be readily obtained as the same becomes better understood by reference to the following detailed description when considered in connection with the accompanying drawings, wherein:
FIGURE 1 shows an on-line two-phase flow meter;
FIGURE 1(a) shows a computer for measuring the outputs of the flow meter illustrated in FIGURE 1;
FIGURE 2 shows a three-phase flow meter with an electronic oil/water monitor;
FIGURE 2(a) shows a computer for measuring the outputs of the flow meter of FIGURE 2;
FIGURE 3 shows a three-phase flow meter with a density type oil/water monitor; and
FIGURE 3(a) shows a computer for measuring the outputs of the flow meter of FIGURE 3.

### Description of the Preferred Embodiments

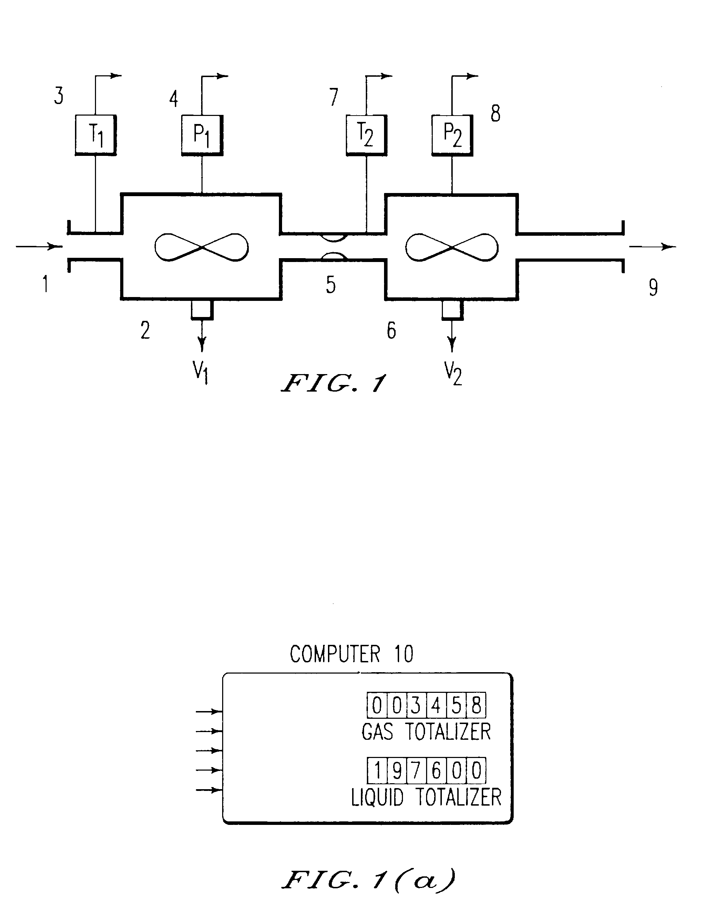

Figure 1 describes an on-line measurement of a two-phase flow output without the need to physically separate the gas from the liquid. The fluid (liquid & gas) enter the flow meter at port (1). The total flow is measured volumetrically by flow meter (2) whose output V₁ is connected to computer (10) (FIGURE 1(a)). The temperature T₁ and pressure P₁ are measured by thermometer (3) and pressure transducer (4). The flow then passes through restrictor (5) which causes it to drop it's pressure to P₂. The gas in the fluid is thus caused to expand, and flow meter (6) therefore indicates a larger volumetric flow V₂. The temperature T₂ and pressure P₂ are measured by (7) and (8) respectively. The fluid leaves the flow meter at port (9).

The volumetric flow is illustrated as follows:${\text{V}}_{\text{1}} {\text{= G}}_{\text{1}} {\text{+ L; V}}_{\text{2}} {\text{= G}}_{\text{2}} \text{+ L}$ where:
V₁ = Total volume of fluid passing through 1st flow meter in 1 sec.
G₁ = Total volume of gas passing through 1st flow meter in 1 sec.
V₂ = Total volume of fluid passing through 2nd flow meter in 1 sec.
G₂ = Total volume of gas passing through 2nd flow meter in 1 sec.
L = Total volume of liquid passing through both flow meters in 1 sec.

If no gas is present, V₁ = V₂ as the liquid is incompressible, and the same volume that enters port (1) must leave port (9). If, however, some gas is present, its volume will expand according to Charles & Boyle's Law, and therefore the flow rate in flow meter (6) will be greater than in flow meter (2). In other words:${\text{V}}_{\text{1}} {\text{< V}}_{\text{2}}$

The increase in volumetric flow is therefore proportional to the amount of gas in the liquid.

The difference between the two flow meters is attributed only to the gas, as the amount of liquid loss due to evaporation is very small if the restrictor (5) does not drop an unacceptable amount of pressure.

Thus the relation between the gas at (2) and (6) is given by Charles/Boyle:${\text{P}}_{\text{1}} {\text{G}}_{\text{1}} {\text{/T}}_{\text{1}} {\text{= P}}_{\text{2}} {\text{G}}_{\text{2}} {\text{/T}}_{\text{2}} {\text{= (P}}_{\text{2}} {\text{+ ΔP)G}}_{\text{1}} {\text{/T}}_{\text{1}} {\text{= P}}_{\text{2}} {\text{(G}}_{\text{1}} {\text{+ ΔV)/T}}_{\text{2}}$ where${\text{ΔP = P}}_{\text{1}} {\text{-P}}_{\text{2}} {\text{and ΔV = G}}_{\text{2}} {\text{-G}}_{\text{1}} \text{.}$

Rearranging Equation 4, we get$\frac{{\text{(P}}_{\text{2}} {\text{+ ΔP)T}}_{\text{2}}}{{\text{P}}_{\text{2}} {\text{T}}_{\text{1}}} \text{=} \frac{{\text{G}}_{\text{1}} \text{+ ΔV}}{{\text{G}}_{\text{1}}} \text{= (1+} \frac{\text{ΔP}}{{\text{P}}_{\text{2}}} \text{)} \frac{{\text{T}}_{\text{2}}}{{\text{T}}_{\text{1}}} \text{= 1 +} \frac{\text{ΔV}}{\text{G1}}$

For T₁≈T₂ a situation one can easily achieve by lagging both flow meters, and mounting them closely together, we get:${\text{ΔP/P}}_{\text{2}} {\text{= ΔV/G}}_{\text{1}} {\text{or ΔV = G}}_{\text{1}} {\text{ΔP/P}}_{\text{2}}$

If the fluid is only gas,${\text{V}}_{\text{1}} {\text{= G}}_{\text{1}} {\text{& V}}_{\text{2}} {\text{+ G}}_{\text{2}}$

This will give the maximum increase in volume:$\text{ΔV = ΔVmax}$

i.e when V₁ = G₁,${\text{ΔVmax = ΔV = V}}_{\text{2}} {\text{- V}}_{\text{1}}$

In other words:${\text{ΔV max = V}}_{\text{1}} {\text{ΔP/P}}_{\text{2}}$

If the fluid contains half gas and half liquid, then ΔV = 1/2ΔV max.

Hence ΔV varies from zero for the case of all liquid, to ΔV max for the all gas case. Thus, the ratio of ΔV/ΔV max yields the ratio of gas/liquid at the working conditions of P₂ and T₂. Now${\text{G}}_{\text{1}} {\text{+ ΔV = G}}_{\text{1}} {\text{P}}_{\text{1}} {\text{/P}}_{\text{2}} {\text{; G}}_{\text{1}} {\text{[(P}}_{\text{1}} {\text{/P}}_{\text{2}} {\text{)-1] = V}}_{\text{2}} {\text{- V}}_{\text{1}} {\text{= G}}_{\text{1}} {\text{ΔP/P}}_{\text{2}}$ Or:${\text{G}}_{\text{1}} \text{=} \frac{{\text{P}}_{\text{2}}}{\text{ΔP}} {\text{(V}}_{\text{2}} {\text{- V}}_{\text{1}} \text{)}$${\text{G}}_{\text{1}} \text{= Volume of gas in the fluid of 1st meter}$

The liquid portion in V₁ is L = V₁ - G₁${\text{L = V}}_{\text{1}} {\text{- (V}}_{\text{2}} {\text{-V}}_{\text{1}} {\text{)P}}_{\text{2}} \text{/ΔP}$

The amount of gas in the 2nd flow meter is:${\text{G}}_{\text{2}} {\text{= G}}_{\text{1}} {\text{+ (V}}_{\text{2}} {\text{-V}}_{\text{1}} {\text{) = (V}}_{\text{2}} {\text{-V}}_{\text{1}} {\text{)(1+P}}_{\text{2}} \text{/ΔP)}$

The gas to liquid ratio is given by:${\text{G/L = [(V}}_{\text{2}} {\text{-V}}_{\text{1}} {\text{)P}}_{\text{2}} {\text{/ΔP]/[V}}_{\text{1}} {\text{(V}}_{\text{2}} {\text{-V}}_{\text{1}} {\text{)P}}_{\text{2}} \text{/ΔP)]}$

The outputs of all the measuring devices are fed to computer (10) which performs the above calculation. It can also extrapolate from P₂ and T₂ to P₃ and T₃ and thus predict the final volume of oil in a tank which is open to atmosphere, at standard pressure and temperature, say one bar and 15.5 °C.

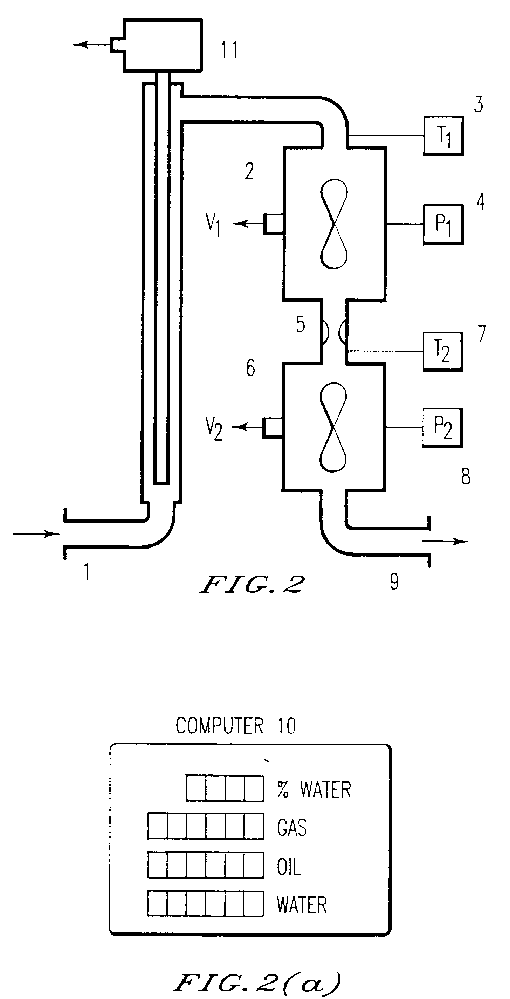

The configuration illustrated in Figure 2 is used when the liquid consists of immiscible liquids such as oil and water. Thus, while the configuration of Figure 1 can determine how much gas and how much liquid flow in a line, the addition of an electronic oil/water monitor (11), such as disclosed in U.S. Patent 4,503,383 is needed to analyze the ratio of the water to the total liquid. As gas appears to such instrument as oil, if we know what is the percent of gas in the liquid, we can determine how much of this liquid is oil. For example, if we have determined that the gas/liquid ratio according to equation 13 is about 40%, and the oil/water monitor (11) is reading about 42% water, we know that only 60% of the 40% remainder is liquid, i.e., the composition consists of$\text{42% water & 40% gas & 18% oil}$

Thus the configuration shown in Figure 2 can further resolve the third component and yield an output as shown on the display of computer (10) (Figure 2(a)): % water and totalized gas, oil and water.

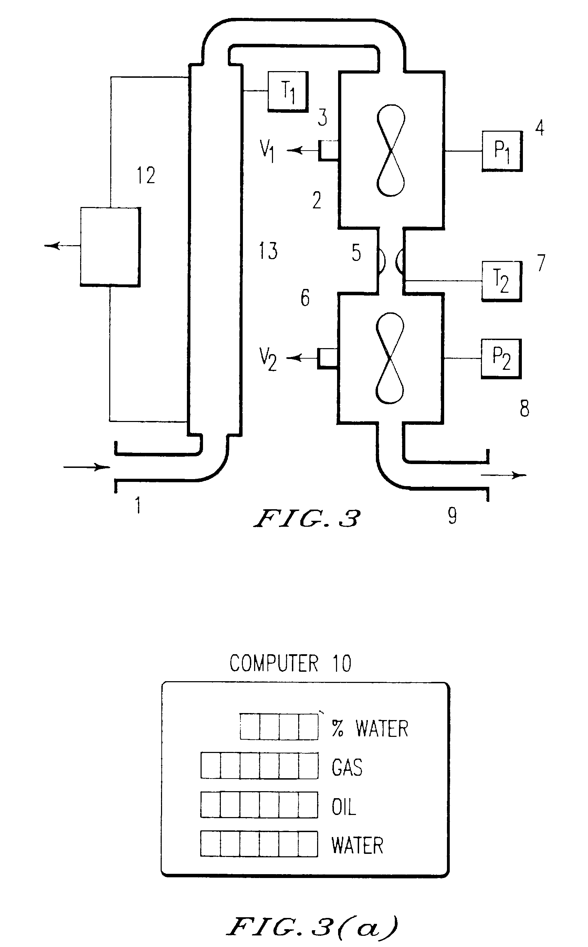

In Figure 3, the oil/water monitor is replaced by a vertical container (13), and a differential pressure transducer (12). The cross section area of this container is bigger than the pipe leading to it, to minimize the effect of any pressure loss due to drag of the fluid. The differential pressure ΔP is thus a direct function of the fluids density ρ as stated in Equation (15).$\text{ΔP = ρh; ρ=ΔP/h}$

Where h is the height of the container (13).

The density of the liquid is then given from Equation (16a) as:${\text{ρ}}_{\text{l}} {\text{= ρV}}_{\text{1}} \text{/L}$${\text{S}}_{\text{L}} {\text{= SV}}_{\text{1}} \text{/L}$

The actual density of the liquid is corrected to standard temperature by means of thermometer (3).${\text{S}}_{\text{L}} {\text{= ρ}}_{\text{L}} {\text{/[1 - α(T}}_{\text{1}} {\text{- T}}_{\text{s}} {\text{)]ρ}}_{\text{w}}$ Where
- S_{L} =: Relative density (S.G.) of the liquid factoring in the temperature coefficient.
- ρ_{L} =: Computed density of the liquid, taking into account the percent gas in the liquid (absolute density in which the temperature coefficient is not considered) (Equation 16a)
- α =: Thermal expansion of the liquid
- T₁ =: Temperature of the liquid
- Tₛ =: Standard temperature

The percent water in the mixture is then computed as follows:${\text{100(S}}_{\text{L}} {\text{- S}}_{\text{o}} {\text{)/(S}}_{\text{w}} {\text{- S}}_{\text{o}} \text{) = %W}$ where
- S_{w}: is the relative density of the process water
- Sₒ: is the relative density of he process oil
- S_{L}: is the relative density of the mixture without gas
- S: is the relative density of the mixture with gas

### Example:

If the S_{w} of the water is 1.1 and the Sₒ of the pure oil is 0.9, then if the measured S of the mixture is S = 0.8 and from the flow difference at the flow meters (from Equation 11) we find that the L/V ratio = 0.75 (i.e 25% gas within the liquid) by substituting S_{L} = SV₁/L (Equation 16b) into Equation 18 for S_{L} we get from Equation 18: 100 ((0.8/0.75 ) - 0.9)/(1.1 -0.9) = 83% water in the liquid.

In this example the % water is 0.83 x 75% = 62% water so that the well is producing;
62% water + 13% oil + 25% free gas at the operating conditions. At lower pressures, the gas will expand (G₃)
to a value which can be extrapolated by the computer (10) (Figure 3(a)).${\text{G}}_{\text{3}} \text{-} \frac{{\text{P}}_{\text{1}}}{{\text{P}}_{\text{3}}} \frac{{\text{T}}_{\text{3}}}{{\text{T}}_{\text{1}}} {\text{G}}_{\text{1}}$

Knowing the density of the fluid, enables one to use other types of flow meters which require density corrections, e.g, orifice plates, mass flow meters, etc.

Obviously, numerous modifications and variations of the present invention are possible in light of the above teachings. It is therefore to be understood that within the scope of the appended claims, the invention may be practiced otherwise than as specifically described herein.

## Claims

1. An apparatus for measuring multi-phase flow, comprising:
means for measuring the relative gas to liquid flow comprising:
first (2) and second (6) series connected flow meters in communication with the multi-phase flow for providing first (V₁) and second (V₂) respective flow signals indicative of the volumetric fluid flow through said first (2) and second (6) flow meters;
a flow restrictor (5), located between said first (2) and second (6) flow meters for restricting the multi-phase flow between said first (2) and second (6) flow meters;
first and second pressure measurement means operably coupled to respective first and second flow meters for providing first (4) and second (8) pressure signals respectively, indicative of the fluid pressure within said first (2) and second (6) flow meters, and;
processing means for producing a gas flow signal indicative of the proportion of gas in said multi-phase fluid flow based at least in part on said first (V₁) and second (V₂) flow signals and said first (4) and second (8) pressure signals,
characterised in that:
said multi-phase flow comprises a gas, a first liquid and a second liquid, and
said apparatus further comprises,
monitor means (11) in communication with said multi-phase flow and coupled in series to said means for measuring the relative gas to liquid flow, for determining the flow of the first liquid relative to the combined flow of said gas and said second liquid and producing a signal indicative thereto; and
further processing means for producing a signal indicative of the flow of the second liquid based on said gas flow signal and said first liquid flow signal.

2. An apparatus for measuring multi-phase flow, comprising:
means for measuring the relative gas to liquid flow comprising:
first (2) and second (6) series connected flow meters in communication with the multi-phase for providing (V₁) first and second (V₂) respective flow signals indicative of the volumetric fluid flow through said first (2) and second (6) flow meters;
a flow restrictor (5), located between said first (2) and second (6) flow meters for restricting the multi-phase flow between said first (2) and second (6) flow meters;
first and second pressure measurement means operably coupled to respective first and second flow meters for providing first (4) and second (8) pressure signals respectively, indicative of the fluid pressure within said first (2) and second (6) flow meters, and;
processing means for producing a gas flow signal indicative of the proportion of gas in said multi-phase fluid flow based at least in part on said first (V₁) and second (V₂) flow signals and said first (4) and second (8) pressure signals,
characterised in that:
said multi-phase flow comprises a gas, a first liquid and a second liquid, and
said apparatus further comprises;
a density meter comprising a vertical chamber (13) and a differential pressure transducer (12) in communication with said multi-phase flow and coupled in series with said means for measuring the relative gas to liquid flow, for measuring the relative density of the multi-phase flow and for producing a corresponding density output signal; and
further processing means for producing a first liquid flow signal and a second liquid flow signal respectively indicative of flow of said first and second liquids, based at least in part on said gas flow signal and said density output signal.

## Patentansprüche

1. Vorrichtung zur Mehrphasen-Strömungsmessung, umfassend: Mittel zum Messen der relativen Gasströmung zur Flüssigkeitsströmung mit
einen ersten (2) und zweiten (6) Strömungsmesser, die in Serie angeordnet sind und mit der Mehrphasenströmung kommunizieren und ein erstes (V1) und zweites (V2) Strömungssignal liefern, das ein Maß für die volumetrische Strömung durch den ersten (2) und zweiten (6) Strömungsmesser ist;
einer Strömungsdrossel (5), die zwischen dem ersten (2) und zweiten (6) Strömungsmesser angeordnet ist zum Drosseln der Mehrphasenströmung zwischen dem ersten (2) und zweiten (6) Strömungsmesser;
einer ersten und zweiten Druckmeßeinrichtung, die mit dem ersten bzw. zweiten Strömungsmesser funktionsmäßig verbunden ist zur Abgabe eines ersten (4) und zweiten (8) Drucksignals, die ein Maß für den Druck des Strömungsmediums in dem ersten (2) und zweiten (6) Strömungsmesser sind, und
Verarbeitungsmitteln zum Erzeugen eines Gasströmungssignals, das den Anteil von Gas in der Strömung des Mehrphasenströmungsmediums angibt, mindestens teilweise auf der Grundlage des ersten (V1) und zweiten (V2) Strömungssignals und des ersten (4) und zweiten (8) Drucksignals,
dadurch **gekennzeichnet**, daß das mehrphasige Strömungsmedium ein Gas, eine erste Flüssigkeit und eine zweite Flüssigkeit enthält und
daß die Vorrichtung ferner aufweist
eine Überwachungseinrichtung (11), die in Kommunikation mit der Mehrphasenströmung steht und in Serie mit der Einrichtung zum Messen der relativen Gasströmung zur Flüssigkeitsströmung gekoppelt ist, zum Bestimmen der Strömung der ersten Flüssigkeit relativ zu der kombinierten Strömung des Gases und der zweiten Flüssigkeit und zum Erzeugen eines hierfür repräsentativen Signals; und
weitere Verarbeitungsmittel zum Erzeugen eines Signals, das die Strömung der zweiten Flüssigkeit anzeigt, auf der Grundlage des Gasströmungssignals und des ersten Flüssigkeitsströmungssignals.

2. Vorrichtung zum Messen einer Mehrphasenströmung, umfassend:
einen ersten (2) und zweiten (6) Strömungsmesser, die in Serie und mit der Mehrphasenströmung kommunizierend angeordnet sind und ein erstes (V1) und zweites (V2) Strömungssignal liefern, das ein Maß für die volumetrische Strömung durch den ersten (2) und zweiten (6) Strömungsmesser ist;
einer Strömungsdrossel (5), die zwischen dem ersten (2) und zweiten (6) Strömungsmesser angeordnet ist zum Drosseln der Mehrphasenströmung zwischen dem ersten (2) und zweiten (6) Strömungsmesser;
einer ersten und zweiten Druckmeßeinrichtung, die mit dem ersten bzw. zweiten Strömungsmesser funktionsmäßig verbunden ist zur Abgabe eines ersten (4) und zweiten (8) Drucksignals, die ein Maß für den Druck des Strömungsmediums in dem ersten (2) und zweiten (6) Strömungsmesser sind, und
Verarbeitungsmitteln zum Erzeugen eines Gasströmungssignals, das den Anteil von Gas in der Strömung des Mehrphasenströmungsmediums angibt, mindestens teilweise auf der Grundlage des ersten (V1) und zweiten (V2) Strömungssignals und des ersten (4) und zweiten (8) Drucksignals,
dadurch **gekennzeichnet**, daß das mehrphasige Strömungsmedium ein Gas, eine erste Flüssigkeit und eine zweite Flüssigkeit enthält und daß die Vorrichtung ferner aufweist einen Dichtemesser mit einer vertikalen Kammer (13) und einem Differenzdruckwandler (12), der mit der Mehrphasenströmung kommuniziert und in Serie mit den Mitteln zum Messen der relativen Gasströmung zur Flüssigkeitsströmung gekoppelt ist, zum Messen der relativen Dichte der Mehrphasenströmung und zum Erzeugen eines entsprechenden Dichteausgangssignals; und
weitere Verarbeitungsmittel zum Erzeugen eines ersten Flüssigkeitsströmungssignals und eines zweiten Flüssigkeitsströmungssignals, die jeweils für die Strömung der ersten und zweiten Flüssigkeit repräsentativ sind, mindestens zum Teil auf der Grundlage des Gasströmungssignals und des Dichteausgangssignals.

## Revendications

1. Un dispositif de mesure de débit d'un courant multiphasique comprenant:
- des moyens de mesure du débit relatif du gaz au liquide comprenant: un premier débitmètre (ou compteur) (2) et un second compteur (6) montés en série raccordés avec le courant multiphasique pour émettre des premiers signaux (V₁) et second signaux (V₂) respectivement indiquant le débit volumétrique de fluide à travers ledit premier compteur (2) et second compteur (6);
un étranglement de courant (5) situé entre ledit premier compteur (2) et ledit second compteur (6) pour freiner le courant multiphasique entre ledit premier compteur (2) et ledit second compteur (6) ;
un premier et un second manomètres raccordés activement au premier compteur et au second compteur respectivement, pour émettre des premiers signaux (4) et des seconds signaux (8) de pression, respectivement, indiquant la pression du fluide à l'intérieur dudit premier compteur (2) et dudit second compteur (6); et
- des moyens de traitement pour émettre un signal de débit de gaz indiquant la proportion de gaz dans ledit courant de fluide multiphasique d'après, au moins en partie, lesdits premiers signaux (V₁) et seconds signaux de débit (V₂) et ledit premier signal de pression (4) et ledit second signal de pression (8)
caractérisé en ce que :
- ledit courant multiphasique comprend un gaz, un premier liquide et un second liquide ; et
- ledit dispositif comprend encore:
un moniteur (11) en communication avec ledit courant multiphasique et couplé en série auxdits moyens de mesure de débit relatif du gaz au liquide, pour déterminer le débit du premier liquide par rapport au débit combiné dudit gaz et dudit second liquide et pour émettre un signal indicatif de leur valeur ; et
- d'autres moyens de traitement pour émettre un signal indicatif du débit du second liquide d'après ledit signal de débit du gaz et dudit signal de débit du premier liquide.

2. Un dispositif de mesure de débit d'un courant multiphasique comprenant:
- des moyens de mesure du débit relatif du gaz au liquide comprenant:
un premier débitmètre (ou compteur) (2) et un second compteur (6) montés en série raccordés avec le courant multiphasique pour émettre des premiers signaux (V₁) et second signaux (V₂) respectivement indiquant le débit volumétrique de fluide à travers ledit premier compteur (2) et second compteur (6);
un étranglement de courant (5) situé entre ledit premier compteur (2) et ledit second compteur (6) pour freiner le courant multiphasique entre ledit premier compteur (2) et ledit second compteur (6);
un premier et un second manomètres raccordés activement au premier compteur et au second compteur respectivement, pour émettre des premiers signaux (4) et des seconds signaux (8) de pression, respectivement, indiquant la pression du fluide à l'intérieur dudit premier compteur (2) et dudit second compteur (6) ; et
- des moyens de traitement pour émettre un signal de débit de gaz indiquant la proportion de gaz dans ledit courant de fluide multiphasique d'après, au moins en partie, lesdits premiers signaux (V₁) et seconds signaux de débit (V₂) et ledit premier signal de pression (4) et ledit second signal de pression (8)
caractérisé en ce que :
- ledit courant multiphasique comprend un gaz, un premier liquide et un second liquide ; et
- ledit dispositif comprend en outre:
un compteur de densité comprenant une chambre verticale (13) et un capteur de pression différentielle (12) raccordé audit courant multiphasique et couplé en série aux dits moyens de mesure des débits relatifs du gaz au liquide, pour mesurer la densité relative du courant multiphasique et pour émettre un signal de sortie de densité correspondant ; et
- d'autres moyens de traitement pour émettre un premier signal de débit liquide et un second signal de débit liquide indicatifs respectivement des débits dudit premier liquide et dudit second liquide basés au moins en partie sur ledit signal de débit de gaz et ledit signal de sortie d'une valeur de densité.
